# FASCICULE DE BREVET EUROPEEN

(11) **EP 2 741 231 B1**
(45) Date de publication et mention de la délivrance du brevet: **07.09.2016**
(21) Numéro de dépôt: 13195228.5
(22) Date de dépôt: 02.12.2013
(51) Int. Cl.: G06K 7/10, A47F 9/04, G07G 1/00, G06K 17/00

(54) **Dispositif de lecture/écriture d'étiquettes RFID et borne d'encaissement comprenant un tel dispositif**
Lese-/Schreibvorrichtung für RFID-Etiketten, und Gebührenautomat, der eine solche Vorrichtung umfasst
Device for reading/writing RFID tags and checkout terminal including such a device

(30) Priorité: 07.12.2012 FR 1261811
(43) Date de publication de la demande: 11.06.2014
(73) Titulaire: IER, 92150 Suresnes (FR)
(72) Inventeur: Bouveresse, Jean-Clément, 95110 Sannois (FR)
(74) Mandataire: Pontet Allano & Associes

(56) Documents cités:
- EP-A1- 1 717 772
- EP-A1- 1 914 662
- EP-A1- 2 109 059
- CN-U- 202 413 873
- GB-A- 2 409 089
- IER: "IER 960", , 30 septembre 2012 (2012-09-30), XP002714231, Extrait de l'Internet: URL:http://www.ier.fr/files/IER_IER960_09_ 2012_FR.pdf [extrait le 2013-10-04]

## Description

La présente invention concerne un dispositif de lecture/écriture d'étiquettes RFID, et notamment d'étiquettes RFID portées chacune par des objets en vue d'identifier lesdits objets. Elle concerne également une borne d'encaissement mettant en oeuvre un tel dispositif.

Le domaine de l'invention est le domaine de la lecture/écriture d'étiquettes RFID, en particulier d'étiquettes RFID identifiant chacune un objet sur lequel elle est apposée en vue de l'encaissement automatisé d'un montant lors d'une opération de vente/achat dudit objet dans un point de vente tel qu'un supermarché.

### Etat de la technique

On cherche depuis quelques années à mettre en place des dispositifs de libre encaissement dans des magasins de type grande surface. On connaît d'ailleurs déjà des bornes d'encaissement comprenant des moyens de lecture optique d'un code-barres et une balance permettant de mesurer le poids de l'objet portant l'étiquette lue en vue, par exemple, de réaliser des vérifications pour confirmer que l'étiquette lue est bien associée à l'objet manipulé. L'utilisateur se servant de ce type de borne passe chaque objet devant le lecteur optique de code-barres puis le pose sur la balance.

Ce type de dispositif fonctionne de manière satisfaisante mais nécessite un temps de lecture relativement long puisque les objets portant les étiquettes sont traités un à un.

On connaît du document EP 2 109 059 A1 un conteneur, se présentant par exemple sous la forme d'un rack, comprenant un ou plusieurs compartiments pour recevoir des articles portant des étiquettes RFID. Le conteneur est en outre doté d'une antenne RFID pour lire les étiquettes RFID portées par les objets et d'un blindage électromagnétique entourant le conteneur.

On connaît également des dispositifs de lecture RFID, par exemple celui décrit dans la demande de brevet publiée sous le numéro FR 2 966 954 A1, permettant d'effectuer une lecture plus rapide ; voire de manière simultanée, de plusieurs étiquettes RFID apposées chacune sur un objet. De tels dispositifs de lecture permettent un encaissement simultané de plusieurs objets lorsqu'ils sont utilisés dans le cadre d'une borne d'encaissement.

Les inventeurs se sont aperçus que ces dispositifs de lecture RFID ne permettent pas de réaliser une lecture efficace d'étiquettes RFID apposées sur certains type d'objets, en particulier lorsque l'objet portant l'étiquette comprend un liquide, tel que par exemple un conteneur de liquide, ou est chargé en liquide, tel que par exemple certains fruits ou légumes.

L'invention a pour but de pallier les inconvénients précités.

Un autre but de l'invention est de proposer un dispositif de lecture d'étiquettes RFID permettant de réaliser une lecture rapide des étiquettes plus efficace que les dispositifs de lecture RFID connus, et ce quel que soit le type d'objets portant les étiquettes.

### Exposé de l'Invention

L'invention permet d'atteindre au moins l'un des buts précités par un dispositif de lecture/écriture d'au moins une étiquette RFID portée par au moins un objet, comprenant :
- au moins une cavité, dite de dépose, pour recevoir ledit au moins un objet, ladite cavité de dépose comprenant :
   - au moins une paroi de fond et au moins une paroi latérale,
   - au moins un moyen de lecture/écriture RFID, et
   - au moins un orifice, dit d'introduction, pour déposer des objets dans ladite cavité et formé sensiblement dans une partie haute de ladite cavité de dépose,
- au moins une paroi, dite de protection, disposée autour dudit orifice d'introduction, s'étendant vers le haut depuis ledit orifice d'introduction et apte à réaliser une atténuation d'ondes entre ladite cavité de dépose et l'extérieur, et
- au moins une ouverture, dite d'accès, pour accéder audit orifice d'introduction au travers de ladite au moins une paroi de protection.

Le dispositif de lecture/écriture selon l'invention permet donc de réaliser une lecture/écriture d'une ou de plusieurs étiquettes RFID portées chacune par des objets déposés dans une cavité de dépose dont l'entrée est entourée par une ou des parois de protection réalisant une atténuation d'ondes entre ladite cavité de dépose et l'extérieur de ladite cavité de dépose. Autrement dit, la ou les parois de protection réalisent un écran de protection principalement contre les ondes d'activation des étiquettes provenant de la cavité de dépose et se dirigeant vers l'extérieur et éventuellement, dans le cas où ces ondes d'activation sont parvenues à quitter la cavité, contre les ondes émises en réponse provenant de l'extérieur et se dirigeant vers la cavité de dépose.

L'ouverture rend cet écran moins performant mais est nécessaire pour garantir l'accès de l'utilisateur à l'espace de dépose des objets. De plus, l'utilisateur, qui se tient devant l'ouverture, permet de remplacer relativement efficacement l'écran au niveau de l'ouverture, et d'empêcher l'émission d'ondes à l'extérieur de la cavité par le biais de l'ouverture.

Pour empêcher de façon encore plus efficace cette émission d'ondes à l'extérieur de la cavité, le dispositif peut comprendre un panneau mobile (en rotation ou translation) entre une position fermée dans laquelle il recouvre l'ouverture et une position ouverte dans laquelle il laisse l'accès à l'ouverture dégagé.

Le dispositif selon l'invention permet ainsi de limiter, dans la cavité de dépose, les perturbations dues aux ondes émises par des sources se trouvant à l'extérieur de la cavité de dépose et pouvant gêner la lecture des étiquettes RFID. De ce fait, le dispositif selon l'invention permet d'augmenter, dans la cavité de dépose, la puissance des ondes utilisées pour réaliser une opération de lecture/écriture, sans risquer d'alimenter et donc lire les étiquettes RFID apposées sur des produits situés au voisinage de la borne, notamment sur des portants contigus à la borne et donc de mieux lire les étiquettes situées dans la cavité, même celles apposées sur des objets comprenant un liquide.

Ainsi, toutes ces caractéristiques permettent au dispositif selon l'invention de réaliser une lecture/écriture rapide d'étiquettes RFID plus efficace que les dispositifs de lecture RFID connus.

Avantageusement, la ou les parois de protection peuvent être agencées de sorte que :
- dans un premier plan, qui est en particulier le plan formé par l'orifice d'introduction et encore plus particulièrement un plan sensiblement horizontal, elles entourent l'orifice d'introduction sur tous ses côtés sauf le côté, ou une partie du côté, qui est en regard de l'ouverture d'accès à l'orifice d'introduction, et
- dans un deuxième plan, qui est en particulier le plan formé par l'ouverture d'accès à l'orifice d'introduction et encore plus particulièrement un plan sensiblement vertical, elles entourent l'ouverture d'accès sur tous ses côtés. L'ouverture d'accès pourrait également ne pas être bordée par la paroi de protection sur un de ses côtés, notamment à son extrémité supérieure,

Avantageusement, le ou les moyens de lecture/écriture RFID sont agencés pour émettre des ondes dans ladite cavité et/ou recevoir des ondes depuis des étiquettes RFID présentes dans ladite cavité en vue de lire lesdites étiquettes RFID et/ou d'écrire dans lesdites étiquettes RFID.

L'au moins un moyen de lecture/écriture RFID peut comprendre notamment au moins une antenne RFID et au moins un lecteur RFID coopérant avec ladite antenne RFID, et de préférence une pluralité d'antennes RFID réparties sur les différentes parois latérales délimitant la cavité de dépose.

La cavité de dépose peut être parallélépipédique.

L'ouverture d'accès et/ou l'orifice d'introduction peu(ven)t être rectangulaire(s).

Avantageusement, l'ouverture d'accès peut former, ou peut être située dans, un plan sensiblement perpendiculaire au plan de l'orifice d'introduction.

Une telle disposition de l'ouverture d'accès par rapport à l'orifice d'introduction permet de diminuer les interférences des ondes, entrant dans la cavité de dépose ou sortant de la cavité de dépose.

L'ouverture d'accès peut être réalisée dans une paroi de protection avant du dispositif de lecture/écriture.

Avantageusement, en configuration d'utilisation, l'orifice d'introduction peut former, ou peut être situé dans, un plan sensiblement horizontal, ou un plan légèrement incliné vers l'utilisateur par rapport au plan horizontal, et l'ouverture d'accès peut former, ou peut être située dans, un plan sensiblement vertical, ou un plan légèrement incliné vers l'utilisateur par rapport au plan vertical.

Une telle disposition relative de l'ouverture d'accès et de l'orifice d'introduction permet de conserver l'avantage de diminution des interférences décrites plus haut tout en facilitant la dépose des objets dans la cavité de dépose. En effet dans ce cas, il suffit d'avancer un sac contenant les objets au travers de l'ouverture d'accès jusqu'à se trouver au-dessus de l'orifice d'introduction, ce qui correspond sensiblement à un mouvement de translation dans un plan sensiblement horizontal, puis de les poser dans la cavité, ce qui correspond sensiblement à un mouvement de translation dans un plan sensiblement vertical.

La cavité de dépose peut être entourée par une paroi, dite externe, englobant ladite ou lesdites parois latérales de ladite cavité de dépose, et ne comportant pas d'angle vif.

Autrement dit, lorsque la cavité de protection comporte des bords ou des arêtes, en particulier pour rejoindre deux parois latérales, alors la paroi externe est arrondie au niveau de chacun(e) de ces bords/arêtes. En effet, les inventeurs ont constaté qu'un angle vif au niveau de la paroi externe avait tendance à se comporter comme une antenne et à rayonner les ondes, ce qui va à l'encontre de l'objectif recherché du confinement des ondes dans la cavité de dépose.

Le dispositif selon l'invention peut en outre comprendre une mousse absorbant les ondes et disposée entre les parois latérales de la cavité de dépose et la paroi externe.

Toutes ces caractéristiques permettent de diminuer encore plus la propagation des ondes générées dans la cavité de dépose vers l'extérieur de la cavité de dépose. Il est ainsi possible d'augmenter la puissance des ondes utilisées dans la cavité de dépose et d'augmenter l'efficacité de lecture/écriture.

L'orifice d'introduction peut être avantageusement ménagé à l'extrémité supérieure de la cavité de dépose.

Le dispositif peut en outre comporter une paroi supérieure, par exemple sensiblement horizontale, reliant les parois latérales et la paroi externe dans laquelle est aménagé l'orifice d'introduction. La paroi supérieure peut éventuellement se prolonger entre les parois latérales.

Alternativement, l'orifice d'introduction peut être réalisé par omission de la paroi supérieure.

Avantageusement, au moins une, en particulier chaque, paroi latérale de ladite cavité de dépose peut être métallique, ce qui permet d'obtenir une réflexion importante des ondes émises utilisées dans la cavité de dépose pour permettre d'alimenter en énergie les étiquettes RFID situées dans cet évidement selon différentes directions et par conséquent d'augmenter le taux de lecture. Cela est particulièrement utile pour lire les étiquettes apposées sur des objets contenant du liquide.

Le dispositif selon l'invention peut, selon un exemple de réalisation, comprendre plusieurs parois de protection latérales, jointives, et s'étendant vers le haut depuis ledit orifice d'introduction, l'ouverture d'accès étant aménagée dans l'une desdites parois latérales.

Le dispositif selon l'invention peut en outre comporter une paroi de protection, dite supérieure, rejoignant de manière jointive l'ensemble des parois de protection latérales. Alternativement, les parois latérales peuvent être inclinées les unes vers les autres de sorte à se joindre à une hauteur donnée.

Selon un autre exemple de réalisation, le dispositif selon l'invention peut comprendre une unique paroi de protection, en particulier réalisée en une pièce unique. Cette paroi latérale peut alors présenter un rayon de courbure prédéterminé, en fonction de la forme et des dimensions de l'orifice. Dans ce cas, l'ouverture d'accès est aménagée dans ladite paroi de protection unique.

Au moins une, en particulier chaque, paroi de protection peut comprendre, au moins en partie, une mousse absorbante choisie pour atténuer les ondes traversant la ou lesdites parois.

Avantageusement, au moins une, préférentiellement chaque paroi de protection peut être réalisée en une matière plastique, tel que le polyéthylène ou le polypropylène, sur sa face intérieure afin de ne pas dévier la trajectoire des ondes dans le cas où une éventuelle mousse absorbante serait située dans la paroi de protection et métallique sur sa face extérieure afin d'avoir une isolation maximum.

En particulier, la paroi de protection peut comprendre un panneau intérieur en matière plastique et un panneau extérieur métallique, une mousse absorbante étant interposée entre ces deux panneaux.

Le panneau intérieur en plastique peut présenter une épaisseur comprise entre 1 et 25 mm.

Le panneau intérieur peut être réalisé en PCV et dépourvu de métaux lourds de type plomb, cadmium ou baryum.

Le panneau intérieur peut être réalisé en PCV de densité de 0.6g/cm³, de dureté 45D, et d'absorption en eau <1.0%.

Le panneau intérieur peut être réalisé en PCV de résistivité surfacique >1.10¹⁴Ω, de résistivité volumique >1.10¹⁵Ω.cm et de constante diélectrique de 1.56 à 1MHz.

Le panneau intérieur peut être réalisé en PCV non inflammable de classe M1.

Au moins une, préférentiellement chaque, paroi de protection présente(nt) une hauteur supérieure ou égale à 0,50m, à partir de l'orifice d'introduction, à savoir surplombe l'orifice d'introduction sur une hauteur supérieure ou égale à 0.5 m. La paroi peut bien entendu également s'étendre dans la partie basse du dispositif, sous l'orifice d'introduction.

Le dispositif selon l'invention peut en outre comprendre au moins un moyen de pesée agencé dans le fond de ladite cavité de dépose pour mesurer le poids des objets déposés dans ladite cavité de dépose.

Plus particulièrement, le moyen de pesée peut comprendre une balance dont le plateau peut former la paroi de fond de la cavité de dépose.

Avantageusement, la puissance des ondes émises par l'au moins un moyen de lecture/écriture peut être modifiée en fonction du poids mesuré par le moyen de pesée. Ainsi, par exemple, lorsque le poids des objets déposés dans la cavité de dépose est important la puissance des ondes émises par l'au moins un moyen de lecture/écriture peut être importante. Au contraire lorsque le poids des objets déposés dans la cavité de dépose est faible la puissance des ondes émises par l'au moins un moyen de lecture/écriture peut être faible également. La modification de la puissance des ondes émises en fonction du poids peut être réalisée soit de manière continue soit par paliers prédéfinis.

Le dispositif peut également comprendre des moyens de détection de présence d'un objet dans la cavité de dépose.

Un tel moyen de détection peut par exemple utiliser un signal fourni par le moyen de pesée ou par un autre moyen, tel qu'une caméra ou au moins une cellule infrarouge agencée dans la cavité de dépose.

Le dispositif selon l'invention peut en outre comprendre au moins un dispositif d'interaction avec un utilisateur. Ce dispositif d'interaction peut être visuel et/ou sonore.

Avantageusement, le dispositif d'interaction peut être situé à distance de l'orifice d'introduction. Ainsi, l'utilisateur dispose d'un espace suffisamment important grâce auquel il peut introduire très facilement les objets dans l'orifice d'introduction du dispositif de lecture.

Un tel dispositif d'interaction permet également à l'utilisateur de mieux gérer ses interactions avec le dispositif de lecture.

Un tel dispositif d'interaction peut comprendre un écran d'affichage agencé sur/dans une paroi de protection, pour afficher des images ou des vidéos, et/ou un ou des haut-parleurs agencé(s) sur/dans une paroi de protection pour diffuser un signal sonore.

Un tel dispositif d'interaction peut éventuellement comprendre en outre une caméra et/ou un microphone.

Lorsque le dispositif d'interaction est un écran, il est situé de préférence en partie supérieure du dispositif.

Le dispositif selon l'invention peut en outre comprendre un moyen de de signalisation lumineux, par exemple agencé sur au moins une paroi de protection, notamment à l'extrémité supérieure de ladite paroi de protection, par exemple pour signaler un état de fonctionnement dudit dispositif.

Selon un exemple de réalisation préféré, la ou les parois de protection réalisent le corps principal du dispositif de lecture/écriture. La cavité de dépose est réalisée dans un module de lecture/écriture qui est démontable, et plus particulièrement amovible, dudit dispositif de lecture/écriture, par exemple au travers d'une parte aménagée dans une paroi de protection en partie basse dudit dispositif.

Par exemple la cavité de lecture peut se présenter sous la forme d'un tiroir ou d'un rack qui peut être glissé dans des glissières aménagées sur le surface intérieure de la ou des parois de protection en partie basse du dispositif de lecture/écriture.

Selon un autre aspect de l'invention il est proposé une borne d'encaissement comprenant :
- un dispositif de lecture/écriture selon l'invention, et
- au moins un dispositif de paiement.

Avantageusement, la borne d'encaissement se présente sous la forme d'un ensemble monobloc, c'est-à-dire que le dispositif de lecture/écriture et le dispositif de paiement sont d'un seul tenant.

Avantageusement, la borne d'encaissement selon l'invention peut comprendre deux dispositifs de paiement distincts :
- un premier dispositif de paiement, tel qu'un lecteur de carte bancaire, relisant une lecture de données de paiement depuis un moyen de paiement par contact avec ce moyen de paiement, par exemple par introduction ou glissement d'une carte bancaire dans le lecteur de carte bancaire, et
- un deuxième dispositif de paiement, tel qu'un lecteur NFC (pour « Near Field Communication » en anglais) relisant une lecture de données de paiement depuis un moyen de paiement sans contact avec ce moyen de paiement.

La borne d'encaissement selon l'invention peut également comprendre au moins un dispositif d'impression d'un rapport, par exemple d'un ticket de caisse et/ou d'un reçu bancaire.

Avantageusement, le dispositif de paiement peut être agencé sur/dans un module contigu au dispositif de lecture/écriture, en particulier en contact avec au moins une paroi de protection dudit dispositif de lecture/écriture. Le dispositif d'impression peut également être agencé dans un tel module.

Dans ce cas, le dispositif de lecture/écriture compose de préférence un corps principal de la borne d'encaissement auquel est rapporté le module contigu.

Les différents éléments de la borne d'encaissement selon l'invention peuvent être reliés à une unité centrale apte à commander chacun des dispositifs ou modules décrits à l'aide d'un programme informatique.

Une telle unité centrale peut être un ordinateur classique comprenant notamment un microprocesseur et une mémoire.

Le programme d'ordinateur peut être exécuté grâce au microprocesseur et stocké dans la mémoire de l'unité centrale.

L'unité centrale peut également être en communication, par exemple par le biais d'un réseau local ou de type Internet, avec un ou plusieurs serveurs extérieurs, locaux ou distants, stockant par exemple une base de données relative aux objets portant les étiquettes RFID.

Selon un autre aspect de l'invention il est proposé un ensemble comprenant deux bornes d'encaissement selon l'invention, le moyen de paiement de chaque borne d'encaissement étant disposé sur un module, dit central, commun audites bornes d'encaissement, en contact avec une paroi de protection du dispositif de lecture/écriture de chaque borne d'encaissement.

Un tel ensemble est préférentiellement réalisé d'un seul tenant, c'est-à-dire sans espace entre les bornes d'encaissement et le module central commun audites bornes d'encaissement.

Le module central commun aux deux bornes d'encaissement peut être disposé entre les bornes d'encaissement.

Selon un autre mode de réalisation, l'ensemble selon l'invention peut comprendre une pluralité de bornes d'encaissements, distribuées autour d'un module central unique commun à toutes les bornes d'encaissement et comprenant les dispositifs de paiement de chacune desdites bornes d'encaissement.

Dans ce cas, les bornes d'encaissement peuvent être disposées de sorte que la paroi avant de chaque borne, comprenant l'ouverture d'accès, est en regard d'une paroi arrière d'une autre borne d'encaissement dudit ensemble.

Avantageusement les bornes d'encaissements de l'ensemble selon l'invention peuvent être disposées de sorte que l'ouverture d'accès et le moyen de paiement d'une desdites bornes sont disposés sur un premier côté dudit ensemble, et l'ouverture d'accès et le moyen de paiement de l'autre desdites bornes sont disposés sur un deuxième côté dudit ensemble, opposé audit premier côté.

Ainsi, deux personnes se trouvant chacune face à l'une desdites bornes se font face l'une à l'autre. Une telle disposition permet de diminuer les interférences mutuelles entre les bornes d'encaissements.

D'autres avantages et caractéristiques apparaîtront à l'examen de la description détaillée d'exemples nullement limitatifs, et des dessins annexés sur lesquels :
- la FIGURE 1 est une représentation schématique d'un exemple non limitatif de borne d'encaissement selon l'invention ; et
- la FIGURE 2 est une représentation schématique d'un exemple non limitatif d'un module de lecture/écriture comportant une cavité de dépose, pouvant être mis en oeuvre dans une borne d'encaissement selon l'invention ; et
- la FIGURE 3 est une représentation schématique d'un exemple non limitatif d'un ensemble selon l'invention comprenant deux bornes d'encaissement selon l'invention.

Sur les figures, les éléments communs à plusieurs figures conservent la même référence.

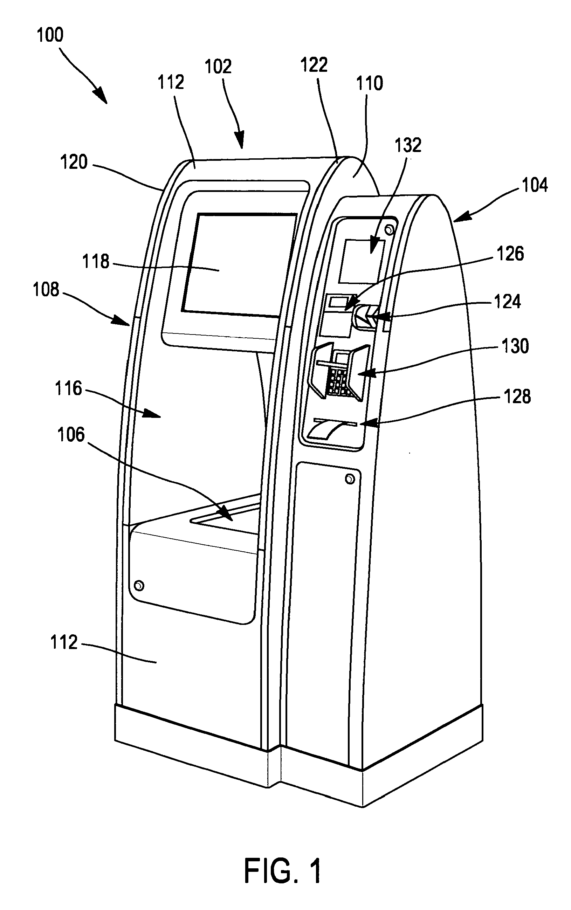

La FIGURE 1 est une représentation schématique d'un exemple de borne de libre d'encaissement selon l'invention.

La borne d'encaissement 100 de la FIGURE 1 comprend un dispositif de lecture/écriture RFID 102 et un module 104, latéral et contigu au dispositif de lecture/écriture 102.

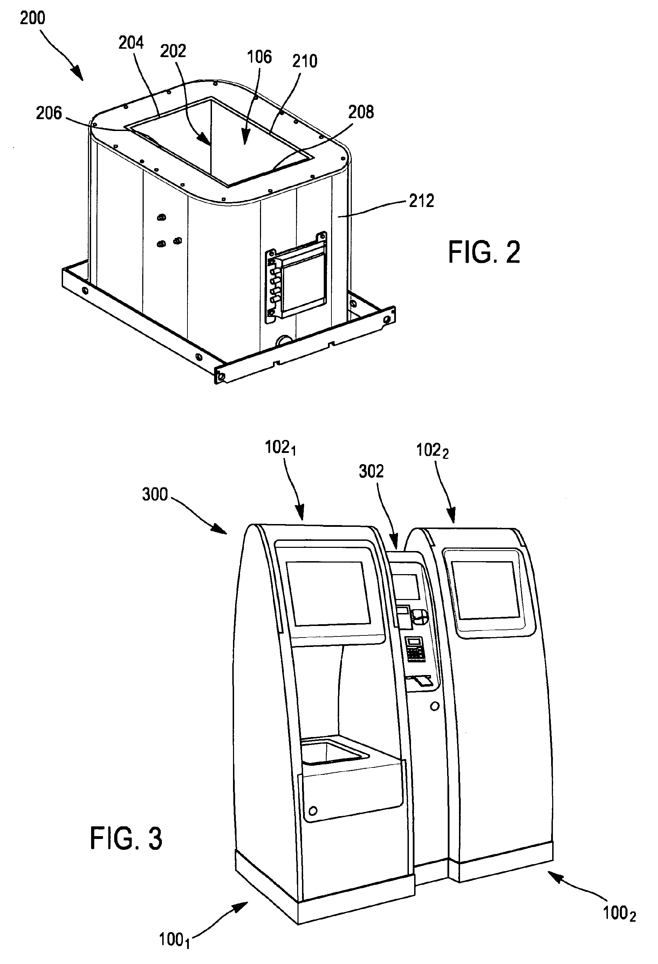

Le dispositif 102 comprend en partie basse une cavité de dépose rectangulaire (non visible sur la figure 1) comportant un orifice 106 d'introduction d'objets dans ladite cavité de dépose, dans un plan sensiblement horizontal. Cette cavité de dépose sera décrite plus en détail en référence à la FIGURE 2.

La cavité de dépose, et plus particulièrement l'orifice d'introduction 106, est entouré par trois parois de protection pleines, i.e. ne comportant pas d'orifices. Ces parois sont deux parois de protection latérales 108 et 110 et une paroi de protection 112 s'étendant sur la face avant et la face arrière du dispositif de lecture. Les parois de protection 108-112 sont disposées autour de l'orifice d'introduction 106 de la cavité de dépose.

Le dispositif comprend également une ouverture 114 d'accès à l'orifice d'introduction 106, aménagée dans la paroi de protection 112 au niveau de la face avant du dispositif de lecture 102. L'ouverture d'accès 116 est aménagée de sorte qu'elle se trouve sensiblement à une hauteur supérieure ou égale à la hauteur de l'orifice d'introduction 106 et forme un plan sensiblement vertical, et donc perpendiculaire au plan horizontal formé par l'orifice d'introduction 106.

Les trois parois de protection 108-112 longent/entourent l'orifice d'introduction 106 dans le plan horizontal, sur tous ses côtés, sauf celui qui est en regard de l'ouverture d'accès 116 à celui-ci, à savoir longent l'orifice sur trois côtés de celui-ci.

Les différentes parois de protection 108-112 comprennent une mousse absorbant les ondes se trouvant à la fréquence utilisée pour la lecture des étiquettes RFID dans la cavité de dépose, afin d'éviter que les objets situés en dehors de la borne d'encaissement 100 ne soient détectés. Plus particulièrement, les parois de protection comprennent un panneau intérieur réalisé en matière plastique, un panneau extérieur réalisé en métal (pour la réflexion des ondes) et une mousse absorbante interposée entre les deux panneaux (pour l'absorption de celles-ci).

Le dispositif 102 comprend en partie supérieure de la borne d'encaissement 100, dans l'espace délimité par les parois latérales verticales de la borne d'encaissement, un moyen d'interaction avec l'utilisateur qui comprend écran 118, et éventuellement un haut-parleur, un microphone ou encore une caméra (non représentés).

Selon la direction verticale de la borne d'encaissement 100, le dispositif de lecture/écriture 102, comprend, en sa partie haute, un volume vide entre les parois de protection 108-112, entre l'orifice d'introduction 106 et l'extrémité supérieure du dispositif de lecture/écriture, ce qui permet à l'utilisateur d'accéder facilement à l'orifice d'introduction 106.

Chaque paroi de protection latérale 108 et 110 comprend à son extrémité supérieure un dispositif de signalisation lumineuse, respectivement 120 et 122. Ce dispositif peut notamment indiquer la disponibilité de la borne d'encaissement 100 ou le succès ou l'échec d'une opération réalisée sur la borne d'encaissement 100.

Dans le mode de réalisation représenté sur le FIGURE 1, les parois de protection de la borne d'encaissement sont hautes d'environ 0.6 mètres au-dessus de l'orifice d'introduction.

Le dispositif de lecture/écriture 102 comprend également un écran (non visible sur la FIGURE 1) situé sur la paroi de fond et dirigé dans la direction opposée de celle de l'écran 118. Cet écran, au contraire de l'écran 118 n'est pas un écran destiné à interagir avec l'utilisateur qui procède à l'encaissement. Il peut par exemple servir à expliquer le fonctionnement de la borne de paiement ou à diffuser des annonces publicitaires relatives au magasin, ou aux services ou produits commercialisés au sein de celui-ci.

La borne d'encaissement comprend également un module latéral 104 en contact et connecté avec le dispositif de lecture/écriture 102. Le module latéral comprend sur sa face avant :
- un premier dispositif de paiement, tel qu'un lecteur 124 de carte bancaire, nécessitant un contact avec un moyen de paiement tel qu'une carte bancaire, par introduction/glissement du moyen de paiement dans une fente du dispositif de paiement prévu à cet effet,
- un deuxième dispositif de paiement, tel qu'un lecteur NFC 126, ne nécessitant pas un contact avec le moyen de paiement ou une introduction d'un moyen de paiement dans une fente, et
- un dispositif d'impression 128 pour l'impression d'un ticket de caisse ou d'un reçu bancaire.

Le module latéral 104 comprend également un clavier 130 et un écran 132 pour interagir avec l'utilisateur.

Le module latéral 104 est disposé à l'extérieur de l'espace délimité par les parois latérales 108-112 de la borne d'encaissement. Plus particulièrement, une paroi latérale du module latéral 104 est en contact avec la paroi latérale 110 du dispositif de lecture/écriture 102.

Le dispositif de lecture/écriture 102 présente une forme générale telle que sa largeur reste constante sur toute sa hauteur alors que sa profondeur diminue progressivement de sa partie basse vers sa partie haute. En partie haute, le dispositif de lecture/écriture 102 se termine par une extrémité arrondie formée par la paroi de protection 112. Sur toute sa hauteur, les parois de protection 108-112 sont jointives la paroi 112 étant disposée entre les parois latérales 108 et 110.

Le dispositif de lecture/écriture présente :
- une forme rectangulaire, vu de sa face avant ou arrière, et
- une forme de fusée, vu de chacune de ses faces latérales. Les deux faces latérales, formées par les parois de protection 108 et 110, présentent d'ailleurs une forme identique de fusée.

Le module latéral 104 est de forme générale extérieure similaire à la forme générale extérieure du dispositif de lecture/écriture 102 et de dimensions inférieures aux dimensions du dispositif 102.

Dans l'exemple représenté sur la FIGURE 1, le module latéral 104 et le dispositif de lecture/écriture 102 sont collés ou assemblés entre eux de sorte que la borne d'encaissement se présente sous la forme d'un ensemble monobloc. Le dispositif de lecture/écriture 102 constitue un corps principal de la borne d'encaissement 100 sur lequel est fixé le module latéral 104.

Les différents éléments de la borne de libre encaissement 100 sont reliés à une unité centrale apte à commander chacun des dispositifs ou module décrits à l'aide d'un programme informatique. Une telle unité centrale est un ordinateur classique comprenant donc notamment un microprocesseur et une mémoire. Le programme d'ordinateur est exécuté grâce au microprocesseur et stocké dans la mémoire de l'unité centrale. L'unité centrale peut également être en communication, par le biais d'un réseau, avec un ou plusieurs serveurs extérieurs, stockant par exemple une base de données relative aux produits commercialisés dans l'espace de vente.

La FIGURE 2 est une représentation schématique d'un exemple non limitatif d'un module de lecture/écriture comportant une cavité de dépose, pouvant être mis en oeuvre dans une borne d'encaissement selon l'invention, en particulier dans la borne d'encaissement 100 de la FIGURE 1.

Le module de lecture/écriture 200 représenté en FIGURE 2 se présente sous la forme d'un tiroir ou d'un rack pouvant être inséré/glissé dans un logement prévu à cet effet en partie basse d'une borne d'encaissement, telle que la borne d'encaissement 100 de la FIGURE 1, et plus particulièrement en partie basse d'un dispositif de lecture/écriture, tel que le dispositif de lecture/écriture 102 de la FIGURE 1. Pour ce faire, la borne d'encaissement, et en particulier le dispositif de lecture/écriture, comprend une porte/trappe d'accès à un tel logement, par exemple aménagé dans une paroi de protection avant du dispositif de lecture/écriture. Le logement est délimité par les parois de protection du dispositif.

Le module 200 représenté sur la FIGURE 2 comprend une cavité 202 réalisant un espace de dépose des objets à acheter muni d'étiquettes RFID destinées à être lues par le dispositif de lecture/écriture.

Le module de lecture/écriture 200 comporte, en sa partie haute, un orifice d'introduction 106 permettant de déposer les objets dans la cavité de dépose 202.

La cavité de dépose 202 est délimitée par quatre parois latérales 204-210 verticales. Chaque paroi latérale 204-210 est métallique et sera appelée dans la suite paroi de lecture.

Le module de lecture/écriture 200 comprend une paroi latérale externe 212 entourant les parois latérales 204-210 et la cavité de dépose 202. La paroi externe 212 ne comprend aucun angle vif pour éviter un rayonnement des ondes émises par le dispositif de lecture.

Chaque paroi de lecture 204-210 comprend également des antennes (non visibles). Ces antennes sont reliées à un moyen de lecture qui permet de lire les données des étiquettes. La cavité de dépose comprend également de préférence un moyen pour inscrire des données dans les étiquettes. Les moyens de lecture et écriture RFID sont bien connus de l'homme du métier et ne seront pas décrits plus en détail ici.

Le module de lecture/écriture 200 comprend une mousse absorbante 214, disposée entre la paroi externe 212 et les parois de lecture 204-210 et prévue pour absorber les ondes utilisées pour la lecture/écriture d'étiquettes RFID.

Le module de lecture/écriture 200 comprend également une balance (non visible) dont le plateau forme la paroi de fond de la cavité de dépose 202.

La FIGURE 3 est une représentation schématique d'un exemple non limitatif d'un ensemble selon l'invention.

L'ensemble 300 représenté sur la FIGURE 3 comprend deux bornes d'encaissement 100₁ et 100₂ et comprenant chacune un dispositif de lecture/écriture 102₁ et 102₂ tel que décrit en référence à la FIGURE 1.

La borne d'encaissement 100₁, par conséquent le dispositif de lecture/écriture 102₁ qui constitue le corps principal de la borne d'encaissement 100₁, est dirigé vers un premier sens, et la borne d'encaissement 100₂, par conséquent le dispositif de lecture/écriture 102₂ qui constitue le corps principal de la borne d'encaissement 100₂, est dirigé vers un deuxième sens opposé au premier sens. Cela signifie que les ouvertures d'accès (permettant l'accès à chaque cavité de dépose) des deux dispositifs 102₁ et 102₂ sont respectivement situées sur deux côtés distincts de la borne.

L'ensemble 300 comprend également un module latéral 302, commun aux deux bornes d'encaissement 102₁ et 102₂, également appelé module central, disposé entre lesdites bornes d'encaissement, en particulier entre les dispositifs de lecture 102₁ et 102₂ des bornes d'encaissement 100₁ et 100₂. Le module central 302 est également en contact avec les dispositifs de lecture 102₁ et 102₂ des bornes d'encaissement 100₁ et 100₂.

Le module central 302 comprend deux ensembles de paiement, chaque ensemble de paiement comprenant deux dispositifs de paiement et un dispositif d'impression ainsi qu'un clavier et un écran, tel que décrit plus haut.

Chaque ensemble de paiement est associé à une borne d'encaissement et est placé d'un côté distinct du module latéral 302. De chaque côté de l'ensemble 300 se trouve donc un accès à une borne d'encaissement, i.e. à un dispositif de lecture/écriture et un ensemble de paiement.

Nous allons maintenant décrire un exemple de procédé d'encaissement selon l'invention, pouvant être mis en oeuvre par une borne d'encaissement selon l'invention, telle que par exemple la borne d'encaissement décrite en référence FIGURE 1.

Un utilisateur introduit des objets mis dans un sac à encaisser dans la cavité de dépose, par le biais de l'ouverture d'accès et l'orifice d'introduction.

Le dispositif de lecture/écriture, par le biais notamment du moyen de pesée, détecte la présence des objets dans la cavité de dépose et commande la lecture des étiquettes RFID apposées sur chacun des objets, à savoir l'émission d'un signal prédéterminé par les moyens de lecture/écriture permettant l'activation des étiquettes situées dans la cavité de dépose.

Les informations lues s'affichent alors sur un écran, par exemple l'écran 118. De telles informations peuvent comprendre le prix de l'objet dont l'étiquette est lue, la référence de l'objet et des informations additionnelles (composition, calories, poids, marque, date limite de consommation etc.). Ces données auront préalablement été inscrites dans la puce RFID et/ou dans une base de données consultable depuis la borne et depuis laquelle on extrait les données mémorisées en association avec une donnée lue dans l'étiquette correspondante.

D'autres informations peuvent s'afficher sur l'écran tel que le nombre total d'objets lus, le prix total, etc., calculés par un module de calcul de l'unité centrale.

Le dispositif de lecture/écriture pèse également les objets par le biais de la balance située au fond du module de lecture et vérifie que le poids des objets lus correspond au poids mesuré, pour vérifier qu'il n'y ait pas des objets qui ne seraient pas positionnés dans l'espace de dépose mais seraient tout de même lus par le dispositif.

Lorsque le poids mesuré correspond au poids théorique, la borne d'encaissement valide la lecture. Dans le cas contraire, elle peut mener une action de signalisation d'alarme, par exemple bloquer le bon déroulement du programme et appeler un agent pour qu'il vérifie et modifie le résultat.

Le résultat de cette étape de vérification du poids peut s'accompagner d'une activation de moyens de signalisation lumineuse, tels que par exemple les moyens de signalisation 120-122 : en vert si la vérification s'avère exacte, en rouge sinon.

Les références des objets dont les étiquettes sont lues sont enregistrées dans une base de données. Optionnellement, une inscription de données dans l'étiquette est également possible à ce stade.

D'autres étapes de vérification peuvent être réalisées, telles que par exemple une vérification que la date limite de consommation associée à un objet est bien postérieure à une certaine date.

Ensuite, un message s'affiche sur l'écran pour demander à l'utilisateur s'il souhaite ajouter d'autres objets. En fonction de la réponse de l'utilisateur, le dispositif de lecture/écriture peut être relancé avec le même déroulé qu'expliqué précédemment ou une étape de paiement peut être initiée.

Un message à l'attention de l'utilisateur est affiché sur l'écran lui demandant par quel moyen il souhaite payer. En fonction de sa réponse, l'un ou l'autre des dispositifs de paiement est activé et prend alors la commande de l'opération de paiement : les messages à destination de l'utilisateur s'affichant alors sur un écran situé au niveau du module latéral de la borne, tel que par exemple l'écran 132 de la FIGURE 1.

Après paiement, un ou plusieurs tickets validant l'opération peuvent être alors imprimés par un dispositif d'impression, tel que le dispositif d'impression 128 de la FIGURE 1.

Une fois l'opération de paiement effectuée, les objets dont les références ont été enregistrées dans les bases de données sont considérés comme payés : cela sera notamment utile au moment où l'utilisateur franchit les portillons antivol du magasin puisqu'à cette étape, les étiquettes seront à nouveau lues et si un des objets n'est pas considéré comme payé, cela activera une alarme liée au portillon antivol.

D'autres étapes peuvent être ajoutées à ce procédé. Par exemple, pour déclencher le procédé d'encaissement, il peut être nécessaire que l'utilisateur interagisse avec le dispositif d'interaction, par exemple en touchant l'écran. On peut également lire une carte de fidélité de l'utilisateur.

Bien entendu, l'invention n'est pas limitée aux exemples qui viennent d'être décrits. Par exemple chaque borne, ou chaque dispositif de lecture/écriture peut comprendre une paroi supérieure rejoignant l'ensemble des parois latérales. Chaque borne peut également présenter une autre forme que celle décrite. Chaque borne d'encaissement peut ne pas comprendre de module latéral (ou central) : dans ce cas le ou les dispositifs de paiement peuvent être disposés sur/dans les parois du dispositif de lecture/écriture. La borne d'encaissement peut également comprendre un seul dispositif de paiement, et le dispositif d'impression est optionnel. Les parois de protection peuvent également être remplacées par une unique paroi de protection ayant un rayon de courbure. L'orifice d'introduction peut ne pas être situé dans un plan horizontal et les parois de protection et l'ouverture d'accès peuvent ne pas être situées dans un plan vertical ou perpendiculaire à celui de l'ouverture d'accès.

D'autres moyens/dispositifs de paiement peuvent être utilisés, tels que des moyens de paiement monétique/billettique permettant un paiement par billets, pièces, chèque déjeuner.

## Revendications

1. Dispositif (102) de lecture/écriture d'au moins une étiquette RFID portée par au moins un objet, comprenant :
- au moins une cavité (202), dite de dépose, pour recevoir ledit au moins un objet, ladite cavité de dépose (202) comprenant :
• au moins une paroi de fond et au moins une paroi latérale (204-210),
• au moins un moyen de lecture/écriture RFID, et
• au moins un orifice (106), dit d'introduction, pour déposer des objets dans ladite cavité de dépose (202), formé sensiblement dans une partie haute de ladite cavité de dépose (202),
- au moins une paroi (108-112), dite de protection, disposée autour dudit orifice d'introduction (106), s'étendant vers le haut depuis ledit orifice d'introduction (106) et apte à réaliser une atténuation d'ondes entre ladite cavité de dépose (202) et l'extérieur, et
- au moins une ouverture (116), dite d'accès, pour accéder audit orifice d'introduction (106) au travers de ladite au moins une paroi de protection (108-112).

2. Dispositif (102) selon la revendication 1, **caractérisé en ce que** l'ouverture d'accès (116) est située dans un plan sensiblement perpendiculaire au plan de l'orifice d'introduction (106).

3. Dispositif (102) selon l'une quelconque des revendications précédentes, **caractérisé en ce qu'**en configuration d'utilisation, l'orifice d'introduction (106) est situé dans un plan sensiblement horizontal, et l'ouverture d'accès (116) est située dans un plan sensiblement vertical.

4. Dispositif (102) selon l'une quelconque des revendications précédentes, **caractérisé en ce que** la cavité de dépose (202) est entourée par une paroi (212), dite externe, englobant la ou les parois latérales (204-210) de ladite cavité de dépose (202), et ne comportant pas d'angle vif.

5. Dispositif (102) selon l'une quelconque des revendications précédentes, **caractérisé en ce que** l'orifice d'introduction est ménagé à l'extrémité supérieure de la cavité de dépose (202).

6. Dispositif (102) selon l'une quelconque des revendications précédentes, **caractérisé en ce qu'**au moins une paroi latérale (204-210) de ladite cavité de dépose (202) est métallique.

7. Dispositif (102) selon l'une quelconque des revendications précédentes, **caractérisé en ce qu'**il comprend plusieurs parois de protection (108-112) latérales jointives, s'étendant vers le haut depuis ledit orifice d'introduction (106), l'ouverture d'accès (116) étant aménagée dans l'une desdites parois de protection latérales (108-112).

8. Dispositif (102) selon l'une quelconque des revendications précédentes, **caractérisé en ce qu'**au moins une paroi de protection (108-112) comprend au moins en partie une mousse absorbante choisie pour atténuer les ondes émises par ledit au moins un moyen de lecture/écriture RFID, ou par la ou les étiquettes RFID.

9. Dispositif (102) selon l'une quelconque des revendications précédentes, **caractérisé en ce que** ladite ou lesdites paroi(s) de protection (108-112) surplombe(nt) l'orifice d'introduction sur une hauteur supérieure ou égale à 0.5m.

10. Dispositif (102) selon l'une quelconque des revendications précédentes, **caractérisé en ce qu'**il comprend en outre au moins un moyen de pesée agencé dans le fond de la cavité de dépose (202) pour mesurer le poids des objets déposés dans ladite cavité de dépose de dépose.

11. Dispositif (102) selon l'une quelconque des revendications précédentes, **caractérisé en ce qu'**il comprend au moins un dispositif (118) d'interaction avec un utilisateur, visuel et/ou sonore, situé à distance de l'orifice d'introduction (106), notamment en partie supérieure du dispositif.

12. Borne (100) d'encaissement comprenant :
- un dispositif (102) de lecture/écriture selon l'une quelconque des revendications précédentes, et
- au moins un dispositif (124-126) de paiement.

13. Borne (100) selon la revendication 12, **caractérisée en ce que** le dispositif de paiement (124-126) est disposé sur un module (104) contigu audit dispositif de lecture/écriture (102), en particulier en contact avec au moins une paroi de protection (110) dudit dispositif (102).

14. Ensemble (300) comprenant deux bornes d'encaissement (100₁-100₂) selon l'une quelconque des revendications 12 ou 13, l'au moins un moyen de paiement de chaque borne (100₁-100₂) étant disposé sur un module (302), dit central, commun audites bornes (100₁-100₂) et en contact avec une paroi de protection du dispositif (102₁-102₂) de lecture/écriture de chaque borne d'encaissement (100₁-100₂).

15. Ensemble (300) selon la revendication 14, **caractérisé en ce que** les bornes d'encaissements (100₁-100₂) sont disposées de sorte que l'ouverture d'accès et le moyen de paiement d'une desdites borne sont disposés sur un premier côté dudit ensemble (300), et l'ouverture d'accès et le moyen de paiement de l'autre desdites bornes sont disposés sur un deuxième côté dudit ensemble, opposé audit premier côté.

## Patentansprüche

1. Vorrichtung (102) zum Lesen/Schreiben wenigstens eines durch wenigstens ein Objekt getragenen RFID-Tags, umfassend:
- wenigstens eine sogenannte Ablegevertiefung (202), um das wenigstens eine Objekt aufzunehmen, wobei die Ablegevertiefung (202) umfasst:
• wenigstens eine Bodenwand und wenigstens eine Seitenwand (204-210),
• wenigstens ein RFID-Lese-/Schreibmittel und
• wenigstens eine sogenannte Einführöffnung (106) zum Ablegen von Objekten in der Ablegevertiefung (202), die im Wesentlichen in einem oberen Teil der Ablegevertiefung (202) ausgebildet ist,
- wenigstens eine sogenannte Schutzwand (108-112), die um die Einführöffnung (106) herum angeordnet ist, die sich von der Einführöffnung (106) aus nach oben erstreckt und die geeignet ist, eine Dämpfung von Wellen zwischen der Ablegevertiefung (202) und der Außenseite zu realisieren, und
- wenigstens eine sogenannte Zugangsöffnung (116) für den Zugang zu der Einführöffnung (106) durch die wenigstens eine Schutzwand (108-112).

2. Vorrichtung (102) nach Anspruch 1, **dadurch gekennzeichnet, dass** die Zugangsöffnung (116) in einer Ebene, die zu der Ebene der Einführöffnung (106) im Wesentlichen senkrecht verläuft, gelegen ist.

3. Vorrichtung (102) nach einem der vorhergehenden Ansprüche, **dadurch gekennzeichnet, dass** in der Gebrauchsausführung die Einführöffnung (106) in einer im Wesentlichen horizontalen Ebene gelegen ist und die Zugangsöffnung (116) in einer im Wesentlichen vertikalen Ebene gelegen ist.

4. Vorrichtung (102) nach einem der vorhergehenden Ansprüche, **dadurch gekennzeichnet, dass** die Ablegevertiefung (202) durch eine sogenannte Außenwand (212) umgeben ist, welche die Seitenwand oder -wände (204-210) der Ablegevertiefung (202) umfasst und keine scharfe Kante aufweist.

5. Vorrichtung (102) nach einem der vorhergehenden Ansprüche, **dadurch gekennzeichnet, dass** die Einführöffnung an dem oberen Ende der Ablegevertiefung (202) ausgebildet ist.

6. Vorrichtung (102) nach einem der vorhergehenden Ansprüche, **dadurch gekennzeichnet, dass** wenigstens eine Seitenwand (204-210) der Ablegevertiefung (202) metallisch ist.

7. Vorrichtung (102) nach einem der vorhergehenden Ansprüche, **dadurch gekennzeichnet, dass** sie mehrere aneinandergesetzte seitliche Schutzwände (108-112) umfasst, die sich von der Einführöffnung (106) aus nach oben erstrecken, wobei die Zugangsöffnung (116) in einer der seitlichen Schutzwände (108-112) angeordnet ist.

8. Vorrichtung (102) nach einem der vorhergehenden Ansprüche, **dadurch gekennzeichnet, dass** wenigstens eine Schutzwand (108-112) wenigstens teilweise einen absorbierenden Schaumstoff umfasst, der gewählt ist, um die durch das wenigstens eine RFID-Lese-/Schreibmittel oder durch das oder die RFID-Tags ausgesandten Wellen zu dämpfen.

9. Vorrichtung (102) nach einem der vorhergehenden Ansprüche, **dadurch gekennzeichnet, dass** die Schutzwand oder -wände (108-112) die Einführöffnung über eine Höhe größer oder gleich 0,5 m überragt/überragen.

10. Vorrichtung (102) nach einem der vorhergehenden Ansprüche, **dadurch gekennzeichnet, dass** sie ferner wenigstens ein Wiegemittel umfasst, das in dem Boden der Ablegevertiefung (202) angeordnet ist, um das Gewicht der in der Ablegevertiefung abgelegten Objekte zu messen.

11. Vorrichtung (102) nach einem der vorhergehenden Ansprüche, **dadurch gekennzeichnet, dass** sie wenigstens eine visuelle und/oder akustische Vorrichtung (118) zum Interagieren mit einem Benutzer umfasst, die im Abstand von der Einführöffnung (106), insbesondere im oberen Teil der Vorrichtung gelegen ist.

12. Gebührenautomat (100), umfassend:
- eine Lese-/Schreibvorrichtung (102) nach einem der vorhergehenden Ansprüche und
- wenigstens eine Zahlungsvorrichtung (124-126).

13. Automat (100) nach Anspruch 12, **dadurch gekennzeichnet, dass** die Zahlungsvorrichtung (124-126) an einem Modul (104) angeordnet ist, welches an die Lese-/Schreibvorrichtung (102) angrenzt, insbesondere mit wenigstens einer Schutzwand (110) der Vorrichtung (102) in Kontakt ist.

14. Anordnung (300), umfassend zwei Gebührenautomaten (100₁-100₂) nach einem der Ansprüche 12 oder 13, wobei das wenigstens eine Zahlungsmittel eines jeden Automaten (100₁-100₂) an einem sogenannten zentralen Modul (302) angeordnet sind, das den Automaten (100₁-100₂) gemein ist und mit einer Schutzwand der Lese-/Schreibvorrichtung (102₁-102₂) eines jeden Gebührenautomaten (100₁-100₂) in Kontakt ist.

15. Anordnung (300) nach Anspruch 14, **dadurch gekennzeichnet, dass** die Gebührenautomaten (100₁-100₂) derart angeordnet sind, dass die Zugangsöffnung und das Zahlungsmittel von einem der Automaten auf einer ersten Seite der Anordnung (300) angeordnet sind und die Zugangsöffnung und das Zahlungsmittel des anderen der Automaten auf einer von der ersten Seite abgewandten zweiten Seite der Anordnung angeordnet sind.

## Claims

1. A device (102) for reading/writing of at least one tag RFID carried by at least one object, comprising:
- at least one cavity (202), called depositing cavity, for receiving said at least one object, said depositing cavity (202) comprising:
• at least one bottom wall and at least one side wall (204-210),
• at least one RFID reading/writing means, and
• at least one aperture (106), called insertion aperture, for depositing objects in said depositing cavity (202), formed substantially in a top part of said depositing cavity (202),
- at least one wall (108-112), called protective wall, arranged around said insertion aperture (106), extending upwards from said insertion aperture (106) and capable of attenuating waves between said depositing cavity (202) and the outside, and
- at least one opening (116), called access opening, for accessing said insertion aperture (106) through said at least one protective wall (108-112).

2. The device (102) according to claim 1, **characterized in that** the access opening (116) is situated in a plane substantially perpendicular to the plane of the insertion aperture (106).

3. The device (102) according to any one of the previous claims, **characterized in that** in the configuration of use, the insertion aperture (106) is situated in a substantially horizontal plane, and the access opening (116) is situated in a substantially vertical plane.

4. The device (102) according to any one of the previous claims, **characterized in that** the depositing cavity (202) is surrounded by a wall (212), called outer wall, encompassing the side wall(s) (204-210) of said depositing cavity (202), and comprising no sharp edges.

5. The device (102) according to any one of the previous claims, **characterized in that** the insertion aperture is arranged at the top of the depositing cavity (202).

6. The device (102) according to any one of the previous claims, **characterized in that** at least one side wall (204-210) of said depositing cavity (202) is metal.

7. The device (102) according to any one of the previous claims, **characterized in that** it comprises several abutting protective side walls (108-112), extending upwards from said insertion aperture (106), the access opening (116) being arranged in one of said protective side walls (108-112).

8. The device (102) according to any one of the previous claims, **characterized in that** at least one protective wall (108-112) comprises at least in part an absorbent foam chosen in order to attenuate the waves transmitted by said at least one RFID reading/writing means, or by the RFID tag(s).

9. The device (102) according to any one of the previous claims, **characterized in that** said protective wall(s) (108-112) surmount the insertion aperture to a height greater than or equal to 0.5 m.

10. The device (102) according to any one of the previous claims, **characterized in that** it also comprises at least one weighing means arranged in the base of the depositing cavity (202) for measuring the weight of the objects deposited in said depositing cavity.

11. The device (102) according to any one of the previous claims, **characterized in that** it comprises at least one visual and/or acoustic device (118) for interaction with a user, situated at a distance from the insertion aperture (106), in particular in the upper part of the device.

12. A collection terminal (100) comprising:
- a reading/writing device (102) according to any one of the previous claims, and
- at least one payment device (124-126).

13. The terminal (100) according to claim 12, **characterized in that** the payment device (124-126) is arranged on a module (104) contiguous with said reading/writing device (102), in particular in contact with at least one protective wall (110) of said device (102).

14. A assembly (300) comprising two collection terminals (100₁-100₂) according to any one of claims 12 or 13, the at least one payment means of each terminal (100₁-100₂) being arranged on a module (302), called central module, common to said terminals (100₁-100₂) and in contact with a protective wall of the reading/writing device (102₁-102₂) of each collection terminal (100₁-100₂).

15. The assembly (300) according to claim 14, **characterized in that** the collection terminals (100₁-100₂) are arranged so that the access opening and the payment means of one of said terminals are arranged on a first side of said assembly (300), and the access opening and the payment means of the other one of said terminals are arranged on a second side of said assembly, opposite said first side.
